Europäisches Patentamt

European Patent Office

Office européen des brevets

(11) Numéro de publication: **0 369 488**
**A2**

## (12) DEMANDE DE BREVET EUROPEEN

(21) Numéro de dépôt: 89121386.0

(22) Date de dépôt: 18.11.89

(51) Int. Cl.5: **B23Q 5/00, B23Q 1/16,**
**B23Q 1/30**

(30) Priorité: 18.11.88 US 273024

(43) Date de publication de la demande:
**23.05.90 Bulletin 90/21**

(84) Etats contractants désignés:
**CH DE ES FR GB IT LI SE**

(71) Demandeur: **Diaz Torga, Antonio**
**41 Delorme**
**St-Constant Québec J0L 1X0(CA)**

(72) Inventeur: **Diaz Torga, Antonio**
**41 Delorme**
**St-Constant Québec J0L 1X0(CA)**

(74) Mandataire: **Bonnetat, Christian**
**CABINET BONNETAT 23, Rue de Léningrad**
**F-75008 Paris(FR)**

(54) **Support-diviseur de pièce usinée pour machines-outils à commande numérique.**

(57) Le support ou plateau (16) comprend une base
(18) destinée à être fixée à une partie (14) de la
machine outil faisant face au support à outil, une
plaque de support (30) de pièce usinée portée par
ladite base (18) de façon à pouvoir y tourner, un
système de freinage (40) porté par ladite base (18)
et par ladite plaque (30) de support et normalement
contrainte en une position de freinage bloquant la
plaque de support (30) pour l'empêcher de tourner
dans l'une ou l'autre direction. La plaque de support
a un orifice (36) au travers lequel une goupille (10)
peut être insérée, la goupille causant le dégagement
du frein (40), de sorte que la goupille (10) puisse
faire tourner la plaque de support (30) vers une autre
position d'indexation. Lorsque la goupille (10) est
retirée de l'orifice (36), le frein (40) bloque automatiquement la rotation de la plaque de support. En
fixant la goupille (10) au plateau d'outil d'une
machine-outil à commande numérique, cette dernière est convertie en une machine-outil ayant un axe
de déplacement additionnel, nommément l'indexation de la rotation de la plaque de support (30) sous
le contrôle du support à outil (T).

Fig.1

# DOMAINE DE L'INVENTION

La présente invention se rapporte à un dispositif de support de pièce usinée pour être utilisé sur des machines-outils à commande numérique.

## ETAT DE LA TECHNIQUE

Chaque axe additionnel de déplacement dans des machines-outils à commande numérique augmente considérablement la complexité et donc le coût de fabrication d'une telle machine-outil, puisque chaque axe de déplacement doit être contrôlé individuellement et commandé par des moyens de force mécanique et électronique. Plus particulièrement, un système à commande numérique pour l'indexation d'une plaque de support sur laquelle la pièce usinée est barrée pour usiner la pièce à usiner selon diverses positions de rotation indexées, est hautement complexe et dispendieuse.

## BUTS DE L'INVENTION

C'est donc un but général de la présente invention de prévoir un dispositif de support de pièce usinée qui soit simple, de construction entièrement mécanique et non entrainée par force, qui, lorsqu'utilisée avec une machine-outil à commande numérique, ajoute à cette machine-outil un axe additionnel de déplacement.

Un autre but de la présente invention est de prévoir un support à pièce usinée ayant les caractéristiques ci-haut décrites, dans lequel l'indexation de la pièce usinée est très précise et est effectuée automatiquement par un support à outil conventionnel de la machine-outil.

## SOMMAIRE DE L'INVENTION

Un dispositif de support de pièce usinée comprenant une base destinée à être fixée à une surface de support, une plaque de support portée de façon tournante par ladite base pour tourner autour d'un axe de plaque de support, ladite plaque de support ayant des moyens d'engagement d'organe espacés de façon radiale dudit axe de plaque de support et avec lequel un organe allongé peut être engagé de façon amovible lorsque ledit organe y est aligné, des moyens de freinage amovibles interposés entre ladite base et ladite plaque de support pour barrer ladite plaque de support de façon à empêcher sa rotation relativement à ladite base et des moyens de dégagement sensibles audit engagement d'organe avec lesdits moyens d'engagement d'organe pour produire le dégagement desdits moyens de freinage, de sorte que lorsque ledit organe n'est pas engagé avec lesdits moyens d'engagement d'organe, ladite plaque de support est barrée par lesdits moyens de freinage dans une première position d'indexation tournée, et l'engagement dudit organe avec lesdits moyens d'engagement d'organe produit le dégagement desdits moyens de freinage pour permettre la rotation de ladite plaque de support par ledit organe à une seconde position tournée d'indexation.

Préférablement, le dispositif est en combinaison avec ledit organe, de sorte que ledit organe est une goupille et lesdits moyens d'engagement d'organe sont un orifice réalisé dans ladite plaque de support et ayant un ajustement coulissant avec ladite goupille.

Avantageusement, ladite base a une première section de base pourvue de moyens pour l'immobiliser à ladite table et une seconde section de base portant ladite plaque de support pour la rotation de celle-ci autour dudit axe de plaque de support en un plan parallèle à ladite seconde section.

Préférablement, ladite plaque de support est circulaire, ledit orifice étant situé de façon adjacente à sa périphérie sur l'extérieur d'une pièce usinée portée par ladite plaque de support.

Profitablement, ladite seconde section de base est en forme de disque et porte un mandrin en son centre, ladite plaque de support étant un disque co-axial à ladite seconde section de base en forme de disque et pouvant tourner sur ledit mandrin.

Alternativement, ladite seconde section de base et ladite plaque de support ont chacune une forme annulaire pour révéler au travers une portion de pièce usinée portée par ladite plaque de support.

Préférablement, ladite goupille a une extrémité biseautée et lesdits moyens de freinage comprennent un organe de freinage circulaire fixé de façon coaxiale à ladite seconde section de base, une paire de sabots de frein courbés s'ajourant avec ledit organe de freinage et ayant une extrémité portée de façon pivotante par ladite plaque de support, et des moyens de ressort contraignant lesdits sabots de frein en contact de freinage avec ledit organe de freinage, lesdits sabots de freinage ayant des portions d'extrémités libres contiguës qui occupent une première position relative lorsque lesdits sabots de frein occupent une position de freinage d'organe, et une seconde position relative lorsque lesdits sabots de frein occupent une position de dégagement d'organe de freinage, et caractérisé en ce que lesdits moyens de dégagement comprennent des encavures opposées réalisées dans lesdites portions d'extrémités libres vis-à-vis ledit orifice, lesdites cavités formant une ouverture fendue dont les dimensions en coupe sont plus petites que celles de ladite goupille lorsque lesdites portions d'extrémités libres sont en ladite première position, de sorte que l'insertion de la goupille au travers ledit orifice et au travers ladite ouverture constituée par lesdites cavités, provoque le déplacement desdites portions d'extrémité libre vers ladite seconde position et, donc, le dégagement desdites sabots de frein dudit organe de frein.

L'on envisage que lesdits sabots de frein et ledit organe de frein aient chacun des surfaces de freinage formant un V en coupe et s'ajourant l'un avec l'autre.

Préférablement, ladite seconde section de base et ladite plaque de support sont des disques parallèles coaxiaux définissant un espace entre eux, ladite seconde section de base portant un mandrin central sur lequel ladite plaque de support est portée de façon à pouvoir librement y tourner, ledit organe de frein étant un organe en forme de disque situé dans l'espace entre ladite seconde section de base et ladite plaque de support, coaxialement à et fixée à ladite seconde section de base et ayant une portion extérieure radiale formant un V biseauté en coupe, lesdits sabots de frein entourant ledit organe de frein dans ledit espace, ayant un sillon longitudinal radial intérieur, formant un V en coupe, pour s'ajourer à la portion extérieure en forme de V dudit organe de frein, lesdits moyens de ressort contraignant lesdites portions d'extrémités libres l'une vers l'autre, lesdites portions d'extrémités libres définissant des faces d'extrémités libres contiguës dans lesquelles sont ménagées lesdites cavités.

Alternativement, il serait souhaitable que ladite seconde section de base et ladite plaque de support soient coaxiales, annulaires et parallèles et qu'elles définissent un espace entre elles, ladite plaque de support portée de façon tournante par ladite seconde section de base pour tourner autour d'un axe coaxial à celle-ci, ledit organe de freinage étant un organe annulaire situé dans ledit espace fixé à ladite seconde section de base et coaxial à celle-ci, un organe de freinage annulaire ayant une portion périphérique radiale intérieure de coupe en V biseauté, lesdits sabots de frein étant situés dans ledit espace et dans ledit organe de freinage annulaire et ayant un sillon longitudinal radial extérieur de coupe transversale en V s'ajourant avec ladite portion intérieure de forme en V dudit organe de frein, lesdits moyens de ressort contraignant les portions d'extrémité desdits sabots de frein dans des directions opposées, lesdites portions d'extrémités libres desdits sabots de frein se chevauchant, lesdites cavités étant décalées dans la direction dudit axe de plaque de support.

Il serait souhaitable que lesdits moyens de freinage comprennent un corps fixé à ladite base et formant une surface cylindrique radiale extérieure coaxiale audit axe de plaque de support, des sections annulaires entourant de façon coulissante ladite surface cylindrique et fixées à ladite plaque de support, lesdites sections annulaires définissant des espaces entre leurs extrémités adjacentes, lesdits espaces étant également espacés d'un point de vue angulaire, des blocs de came pouvant être radialement déplacés dans lesdits espaces, chaque bloc de came ayant une paire intérieure radiale de portions opposées de surfaces de came biseautées, une roulette pour chaque bloc de came passant entre ladite surface cylindrique et ladite paire de portions de surface de came, de sorte qu'un déplacement radial vers l'intérieur desdits blocs de came dans lesdits espaces provoque le contact desdites roulettes avec ladite surface cylindrique et avec les portions de surface de came respectives pour fournir une barrure deux-voie de ladite plaque de support à ladite base, chaque bloc de came ayant une surface de came radialement extérieure; un anneau continu entourant de façon coulissante lesdites sections d'anneau et coaxial audit axe de plaque de support, ledit anneau continu ayant des doigts faisant saillie radialement vers l'intérieur chacun entrant en contact avec la surface extérieure de came d'un bloc de came, de sorte qu'on obtient le déplacement rotatif dudit anneau continu dans une direction en une première position produit un déplacement radial vers l'intérieur dudit bloc de came et la barrure de ladite plaque de support, et des moyens de contrainte agissant entre ledit anneau continu et ladite plaque de support pour contraindre ledit anneau continu vers ladite première position; et lesdits moyens de dégagement comprenant un orifice ménagé dans ledit anneau continu partiellement vis-à-vis ledit orifice dans ladite plaque de support, lorsque ledit anneau continu est dans ladite première position, de sorte que l'insertion de la goupille dans l'orifice de ladite plaque de support et dans l'orifice dudit anneau continu provoque le déplacement dudit anneau continu dans une direction opposée à ladite première position vers une seconde position dans laquelle lesdits blocs de came peuvent se déplacer radialement vers l'extérieur, pour ainsi débarrer ladite plaque de support.

Avantageusement, lesdites portions de surface de came radialement intérieures sont radialement divergentes vers l'intérieur, et alors il y aura une seule roulette pour chaque bloc de came.

Alternativement, lesdites portions de surfaces de came radialement intérieures sont divergentes radialement vers l'extérieur et alors il y aura pour chaque bloc de came, une paire de roulettes en contact respectif avec lesdites portions de surface de came.

L'on envisage également de prévoir des moyens d'accotement entrant en contact avec ledit rouleau unique sur ses côtés opposés pour centrer ledit rouleau unique par rapport auxdites portions de surface de came.

Profitablement, lesdits moyens d'accotement sont des pistons contraints par des ressorts.

Préférablement, l'on prévoit des blocs d'accotement entrant en contact avec ladite paire de roulettes sur des côtés opposés de ladite paire de roulettes pour centrer ladite paire de roulettes par rapport auxdites portions de surfaces de came, lesdits blocs étant fixés de façon ajustable auxdites sections annulaires pour un déplacement ajustable vers et à l'opposé desdites paires de roulettes.

Avantageusement, ladite surface de came radialement extérieure de chaque bloc de came comprend un épaulement pour permettre un déplacement radial rapide dudit bloc de came lorsque ledit anneau continu est déplacé en rotation.

Préférablement, ladite base a une section inférieure et une section supérieure dans des plans respectivement normaux l'un à l'autre, ladite section inférieure ayant des moyens pour la fixer à ladite table et ladite section supérieure portant ladite plaque de support pour la rotation de celle-ci autour dudit axe de plaque de support selon un plan parallèle à ladite section supérieure.

Profitablement, ladite plaque de support est circulaire, ledit orifice étant situé de façon adjacente à la périphérie de ladite plaque circulaire de support sur l'extérieur d'une pièce usinée portée par ladite plaque de support.

Profitablement, ladite section supérieure de base est en forme de disque et porte un mandrin en son centre, ladite plaque de support formant un disque coaxial à ladite section de base en forme de disque et pouvant tourner sur ledit mandrin.

Alternativement, ladite section supérieure de base et ladite plaque de support ont chacune une forme annulaire pour révéler au travers une portion de pièce usinée portée par ladite plaque de support.

Avantageusement, ladite goupille a une portion principale, une pointe biseautée séparée coaxiale qui peut tourner par rapport à ladite portion principale autour de l'axe longitudinal de celle-ci.

Ou bien, ladite goupille a une portion principale, une portion intermédiaire et une portion de pointe biseautée, l'ensemble desdites portions étant coaxial, des moyens frangibles fixant ladite portion intermédiaire à ladite portion principale et pouvant se briser lorsqu'une force de cisaillement est appliquée sur ladite portion intermédiaire, transversalement à l'axe longitudinal de ladite portion principale et d'une magnitude allant au-delà d'une force de cisaillement prédéfinie, ladite portion de pointe biseautée étant portée de façon à pouvoir tourner par ladite portion intermédiaire pour une rotation autour de l'axe longitudinal desdites portions.

Il serait souhaitable d'avoir des moyens d'accotement disposés sur des côtés opposés de ladite paire de roulettes pour centrer ladite paire de roulettes par rapport auxdites portions de surface de came, lesdits moyens d'accotement comprenant des blocs à ouverture conique échancrée, un organe de coin étant inséré dans ladite ouverture de chaque bloc pour l'expansion ajustable dudit bloc par ajustement axial dudit organe en coin dans ladite ouverture et des moyens de boulon vissés dans lesdites sections annulaires pour ajuster la position axiale desdits organes de coin.

Il serait souhaitable de prévoir, en combinaison avec le dispositif de support ci-haut décrit, un instrument pour tourner de façon manuelle ladite plaque de support jusqu'à une position d'indexation à 0 degré, comprenant un corps cylindrique allongé ayant un ajustement coulissant avec ledit orifice de plaque de support et susceptible de libérer lesdits moyens de freinage lorsque poussé dans ledit orifice, ledit corps ayant un orifice axial et une tige de traînée pouvant coulisser dans ce dernier orifice pour passer de façon coulissante dans ledit orifice de base, ledit orifice de base étant vis-à-vis du point de vue axial dudit orifice de support lorsque ladite plaque de support est en sa position d'indexation à 0 degré.

Préférablement, l'on aura une portion filetée à l'extérieur constituée par ledit corps cylindrique, un collier fileté à l'intérieur pouvant être vissé sur ladite portion filetée vers l'extérieur, ledit collier étant destiné à accoter ladite plaque de support lorsque ledit corps est inséré dans ledit orifice de plaque de support en une position pour dégager lesdits moyens de freinage.

Préférablement, le dispositif est combiné à une machine-outil à commande numérique du type ayant un support à outil et une table relativement déplaçable selon les axes X, Y, et Z, et en combinaison avec ledit organe, celui-ci étant fixé de façon amovible audit support d'outil, ladite base étant fixée à ladite table qui est ladite surface de support, ladite plaque de support étant destinée à porter une pièce usinée selon une position faisant face audit support d'outil, ledit organe engageable avec lesdits moyens engageant un organe lorsqu'il y a un mouvement relatif de ladite table et dudit support d'outil selon ledit axe Z suite à ce que ledit organe soit aligné avec lesdits moyens d'engagement d'organe, et tournant ledit support d'outil dans un cercle autour dudit axe de plaque de support provoquant la rotation de ladite plaque de support.

Dans toutes les réalisations, les moyens de freinage sont dégagés seulement lorsque la goupille a été insérée dans l'orifice de plaque de support et freineront celle-ci avant le retrait de la goupille. Donc, une indexation précise est obtenue. Le support d'indexation de l'invention peut être utilisé pour d'autres buts qu'en association avec une machine outil.

## COURTE DESCRIPTION DES FIGURES DES DESSINS

La figure 1 représente une vue en perspective du dispositif de support de pièce usinée d'indexation selon une première réalisation de l'invention et montrant également une portion de support d'outil et en traits pointillés une portion de table pouvant tourner d'une machine outil à commande numérique;

La fig 2 est une élévation avant du support de la fig 1;

la figure 3 en est une vue en élévation de côté;

la fig 4 est une coupe sur la ligne 4-4 de la fig 3;

les figures 5 et 6 sont des coupes partielles selon les lignes 5-5 et 6-6 respectivement de la figure 2;

la figure 7 est une vue en perspective d'une seconde réalisation du support lui-même;

la figure 8 est une élévation avant de la figure 7;

la fig 9 est une coupe sur la ligne 9-9 de la figure 8;

la figure 10 est une coupe en plan selon la ligne 10-10 de la figure 9;

la figure 11 est une coupe transversale partielle en plan, prise le long de la ligne 11-11 de la figure 10;

la figure 12 est une coupe en plan selon une ligne similaire à la ligne 4-4 de la figure 3 mais montrant une autre réalisation des moyens de freinage et des moyens de dégagement;

la figure 13 est une coupe agrandie en plan de la portion prise dans l'aire 13 de la figure 12;

les figures 13a et 13b, montrées à la septième feuille des dessins, sont des vues schématiques de la portion de la figure 13 montrant le bloc de came et les roulettes et montrant les positions d'embrayage et de débrayage, respectivement, des roulettes et des blocs de came;

la figure 13c est une vue similaire à celle de la figure 13a mais montrant une réalisation modifiée de l'agencement de roulette;

la figure 13d, montrée sur la huitième feuille des dessins, montre encore un autre agencement de blocs de came de systèmes de roulette pour l'embrayage;

la figure 14, montrée à la sixième feuille des dessins, est une coupe partielle prise le long de la ligne 14-14 de la figure 12;

la figure 15 est une vue agrandie arrière d'une portion de la figure 12 montrant la position décalée de l'ouverture annulaire de came par rapport à l'orifice de la plaque de support;

la figure 16 est une coupe transversale le long de la ligne 16-16 de la figure 15;

la figure 17 est une coupe partielle selon la ligne 17-17 de la figure 13d;

la figure 18 est une vue en perspective de l'organe de coin montré aux figures 13d et 17;

la figure 19 est une vue d'extrémité du bloc fendu montré aux figures 13d et 17;

la figure 20 est une coupe transversale partielle semblable à celle de la figure 14 mais de la réalisation annulaire montrée à la figure 7;

la figure 21 est une élévation éclatée de côté, partiellement en coupe longitudinale, d'une portion de goupille de déclenchement modifiée;

la figure 22 est une vue en perspective de l'anneau frangible utilisé dans la goupille modifiée de la figure 21; et

la figure 23 est une vue partielle semblable à celle de la figure 20 mais montrant en coupe longitudinale un instrument utilisé manuellement pour l'indexation manuelle de la plaque de support à une position d'indexation zéro.

## DESCRIPTION DETAILLEE DES REALISATIONS DE L'INVENTION

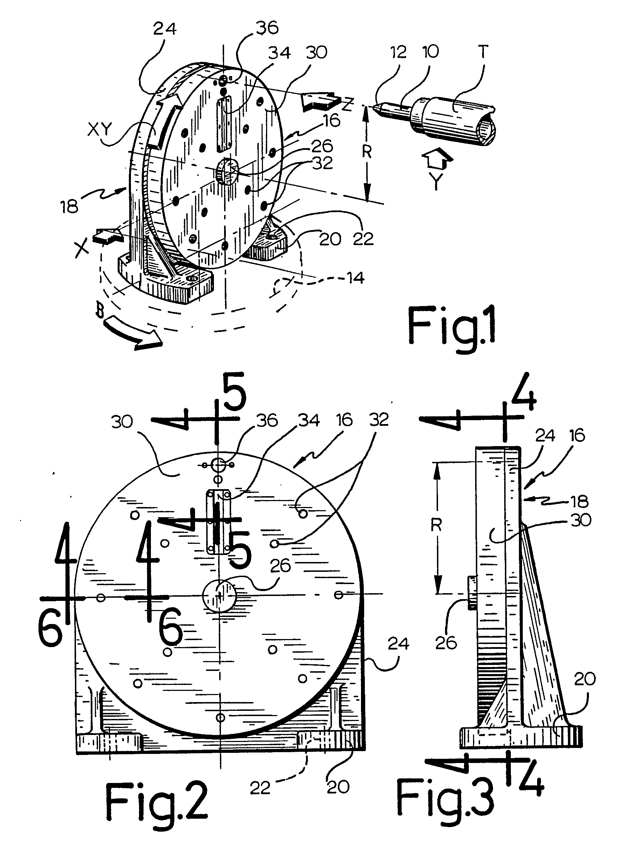

Si on se réfère à la réalisation illustrée aux figures 1 à 6 inclusivement, l'on voit à la figure 1 un mandrin ou support à outil T d'une machine-outil à commande numérique. Ce support à outil, en plus de tourner autour de son axe longitudinal lorsque usinant, peut être déplacé le long d'un axe vertical Y et d'un axe horizontal Z.

Selon l'invention, l'on prévoit un organe de goupille cylindrique 10 ayant une pointe biseautée 12, la goupille étant maintenue par le support à outil dans le cadre de la présente invention. La machine-outil comprend au surplus une table 14 qui peut tourner autour d'un axe vertical tel qu'indiqué par la flèche B. La table 14 peut aussi être déplacé transversalement le long d'un axe transversal horizontal X. Les mouvements de la machine outil le long des axes X, Y, Z et b sont commandés numériquement.

Le support à proprement parler est identifié par 16 et comprend une base 18, ayant une section inférieure 20 pourvue d'orifices 22 ou semblable pour fermement fixer la base à la table 14. La base comprend au surplus une section supérieure 24 faisant saillie vers le haut et normale à la section inférieure; ladite section supérieure forme un corps en forme de disque portant en son centre un mandrin 26 (voir la figure 5), qui est fixé à la section supérieure 24 par un boulon 28. Une plaque de support en forme de disque, 30, est installée sur le mandrin 26 pour la rotation libre dans un plan parallèle à la section de base supérieure 24. La plaque de support 30 est pourvue à sa face avant d'une pluralité d'orifices filetés 32 pour y fixer de façon amovible une monture, laquelle à son tour porte une pièce à être usinée, la monture et la pièce à usiner n'étant pas représentées. La face avant de la plaque de support 30 peut aussi être pourvue d'un sillon radial et d'un passage 34 qui y est fixée. Le passage 34 de même que l'extrémité saillante du mandrin 26 sont utilisés pour s'orienter et se centrer sur la plaque de support 30, la monture portant la pièce à usiner.

A la périphérie de la plaque de support 30, l'on prévoit une ouverture 36, constituée d'une douille 38 (voir la figure 5) insérée dans un orifice de plaque 30 pour recevoir de façon coulissante la portion cylindrique de la goupille 10. L'orifice 36 est un orifice indexeur parallèle à l'axe de plaque de support formé parle mandrin 26.

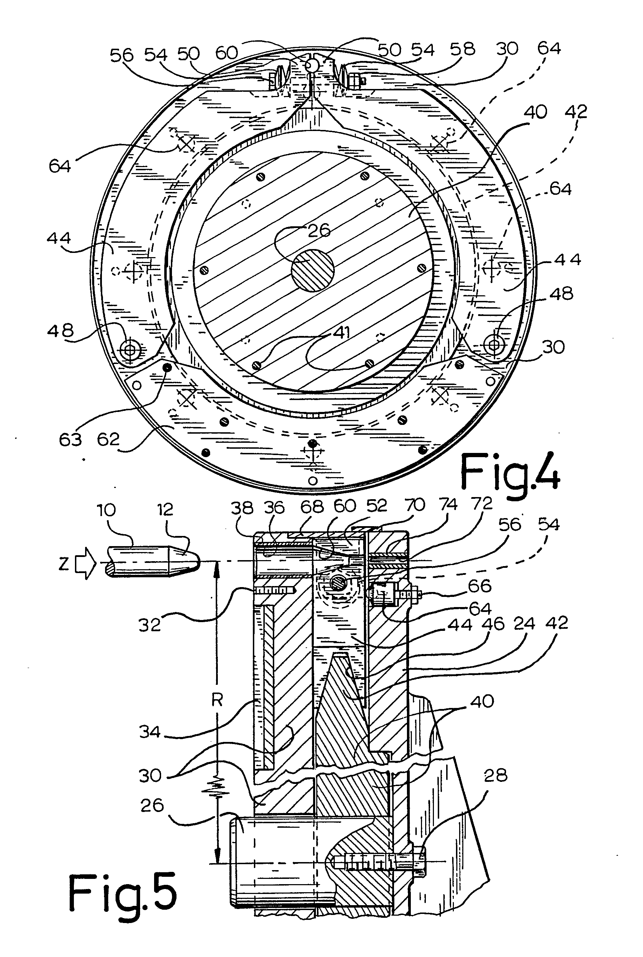

Tel que montré à la figure 5, la plaque de support 30 est parallèle à et espacée à l'avant de la section de base supérieure 24 et l'on prévoit dans ledit espace des moyens de freinage selon une première réalisation de l'invention. Lesdits moyens de freinage comprennent un organe de freinage 40 fixé par des boulons 41 (figure 4) à la section de base supérieure 24 et dans la forme d'un disque constituant un rebord biseauté vers l'extérieur en coupe, 42, définissant deux surfaces de freinage mutuellement inclinées. Une paire de sabots de freinage courbés, 44 (voir les figures 4 et 5) entourent le rebord 42 de l'organe de frein 40 et ont un sillon radialement intérieur 46 de forme biseautée en coupe pour recevoir et s'accoupler avec le rebord biseauté en coupe 42 de l'organe de frein 40. Les sabots 44 sont pivotés à une extrémité au moyen du pivot 48 à l'arrière de la plaque de support 30 et leurs portions d'extrémités libres orientées radialement vers l'extérieur, 50, passent face à face et se ferment ensemble sous la contrainte de moyens de contrainte qui sont préférablement des ressorts de Belleville 54 installés sur un boulon 56 passant au travers les deux portions d'extrémités libres 50, la force de compression exercée par les ressorts 54 sur chaque côté extérieur des portions d'extrémités libres 50 étant ajustée par l'écrou 58 et l'écrou de barrure 58 est fileté sur le boulon 56. Les faces opposées des portions libres d'extrémités 50 sont chacune pourvue d'une encoche qui vient en regard 60 et les deux encoches sont biseautées axialement pour former une ouverture fendue qui vient vis-à-vis l'orifice de plaque de support 36, cet orifice fendu ayant une aire en coupe plus petite que cet orifice 36 lorsque les sabots de frein 44 sont en position de freinage sous la contrainte des ressorts 54. Dans la position de freinage, les sillons 46 sont en contact de freinage avec le rebord 42 de l'organe de freinage. Tel que montré à la figure 4, les deux sabots de frein passent au travers environ cent vingt degrés chacun et comprennent au surplus un organe courbé stationnaire de freinage, 62, fixé par des boulons 63 à l'arrière de la plaque de support 30 et ayant un sillon en forme de V pour recevoir de façon coulissante le rebord biseauté en coupe 42 de l'organe de freinage 40.

Préférablement, la section supérieure de base 24 porte une pluralité de roulements à billes 64 également espacés du point de vue angulaire autour d'une section supérieure de base 24 et portant contre la face arrière des sabots de frein 44 et de l'organe de freinage 62 pour une rotation précise et libre de la plaque de support 30. Des roulements à butée 64 sont ajustés axialement par des boulons 66.

Afin d'assurer la propreté dans la région des sabots de frein et de l'organe de freinage, la plaque de support 30 porte à sa périphérie un bouclier cylindrique 68 surplombant les sabots de frein 44 et l'organe de frein 62 et le joint entre ledit bouclier 68 et la périphérie de la section de base supérieure est fermée par une bande annulaire 70 en contact coulissant surplombant avec le bouclier 68.

Un orifice 72, formé par une douille 74 réalisée dans l'orifice dans la section de base supérieure 24, est précisément aligné sur l'orifice de la plaque de support d'indexation 36 lorsque ladite plaque de support est tournée en une position à indexation zéro. Le but d'un tel orifice 74 sera explicité ci-après.

Le dispositif de support à pièce usinée de la première réalisation fonctionne de la façon suivante: une pièce à usiner est immobilisée sur la plaque de support 30 dans une telle position qu'elle dégage l'orifice d'indexation 36 de ladite plaque de support. Nous supposons que la plaque de support est indexée ou "divisée" en une position d'indexation à zéro degré, tel que montré à la figure 1, avec l'orifice 36 en haut. Le déplacement relatif de la table de machine outil, en 14, le long de l'axe transversal horizontal X et le déplacement concomitant du support à outil le long de l'axe vertical Y entraînera la goupille 10 portée par le support à outil T vis-à-vis l'orifice 36 de la plaque de support. Le déplacement du support d'outil le long de l'axe Z provoquera l'insertion de la goupille 10 dans l'orifice 36 avec un ajustement par coulissement et la pointe biseautée 12 de la goupille 10 entrera dans l'ouverture fendue définie par les encoches 60 aux portions d'extrémités libres des sabots de frein et produira le pivotement vers l'extérieur desdits sabots pour ainsi dégager la plaque de support pour une libre rotation sous le contrôle de la goupille 10 demeurant complètement insérée. Donc, le déplacement de la table 14 le long de l'axe X conjugué au déplacement du support à outil le long de l'axe vertical Y provoquera la rotation de la plaque de support 30, et, par conséquent, de la pièce usinée qui y est fixée selon la flèche XY dans une direction ou l'autre jusqu'à une autre position tournée précisément indexée de la plaque de support 30, auquel point la goupille 10 est retirée par le support d'outil se déplaçant le long de l'axe Z. Immédiatement après que la goupille 10 dégage les encoches 60, les sabots de frein pivotent à leur position de freinage sous l'action des ressorts de Belleville 54, pour ainsi immédiatement barrer la plaque de support 30 à sa position nouvellement indexée. La goupille 10 est enlevée et remplacée par un outil approprié pour usiner la pièce à usiner à la nouvelle position indexée.

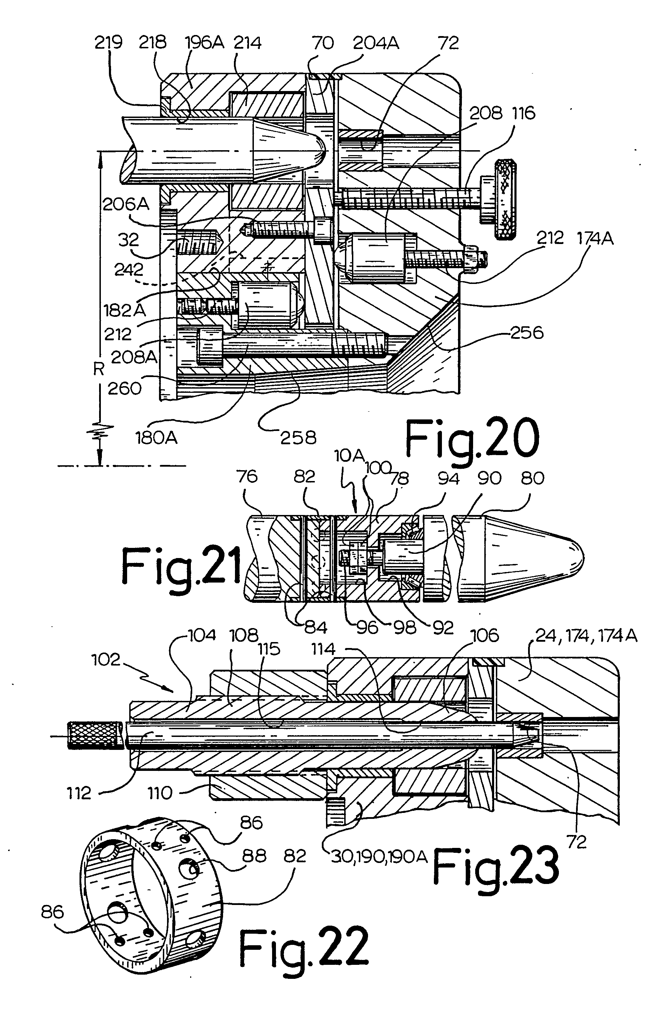

Pour permettre une installation plus précise de la goupille 10 dans l'orifice 36 de la plaque de support 30, tout en permettant une libre rotation de la plaque de support par la goupille 10, et aussi pour empêcher que ne soit endommagé le mécanisme contrôlant les déplacements transversaux de la table 14 et du support à outil dans le cas où la plaque de renfort 30 soit empêchée de tourner librement pour toute raison, la goupille 10 est préférablement modifiée, tel que montré aux figures 21 et 22. La goupille 10a a une section cylindrique principale 76, une section intermédiaire 78 et un tronçon d'extrémité 80, toutes installées coaxialement bout à bout. L'extrémité extérieure du tronçon principal 76 est reliée au tronçon intermédiaire 78 au moyen d'un anneau frangible 82 entourant les portions adjacentes en retrait des deux tronçons 76, 78 et fixé en position par des goupilles transversales 84 engageant les orifices dans les deux tronçons 76, 78 et des orifices 86 dans l'anneau 82. La force de cisaillement requise pour briser l'anneau 82 peut être ajusté en ajustant le nombre et\ou le diamètre des orifices 88 ménagés dans l'anneau 82. Avec cet agencement, si, durant la rotation de la plaque de renfort par la goupille 10a sous le contrôle du support à outil T, quelque chose venait qu'à bloquer la rotation de la plaque de renfort, l'anneau 82 se briserait avant tout dommage au mécanisme à commande numérique déplaçant le support à outil T et\ou la table 14.

La portion de pointe 80 a une extrémité intérieure à diamètre réduit, 90, pénétrant dans une cavité 92 dans la portion intermédiaire 78 et installée sur un roulement à butée 94 de façon à pouvoir y tourner. Un boulon 96 passe de l'extrémité intérieure 90 au travers une cavité 92 reliée à l'orifice et une autre cavité 98 et des écrous 100 sont filetés sur le boulon 96 dans la cavité 98 pour ajuster le jeu du roulement à butée 94. Dès lors, le tronçon de pointe 80 peut tourner librement autour de l'axe longitudinal de la portion intermédiaire 78 et relativement à celle-ci.

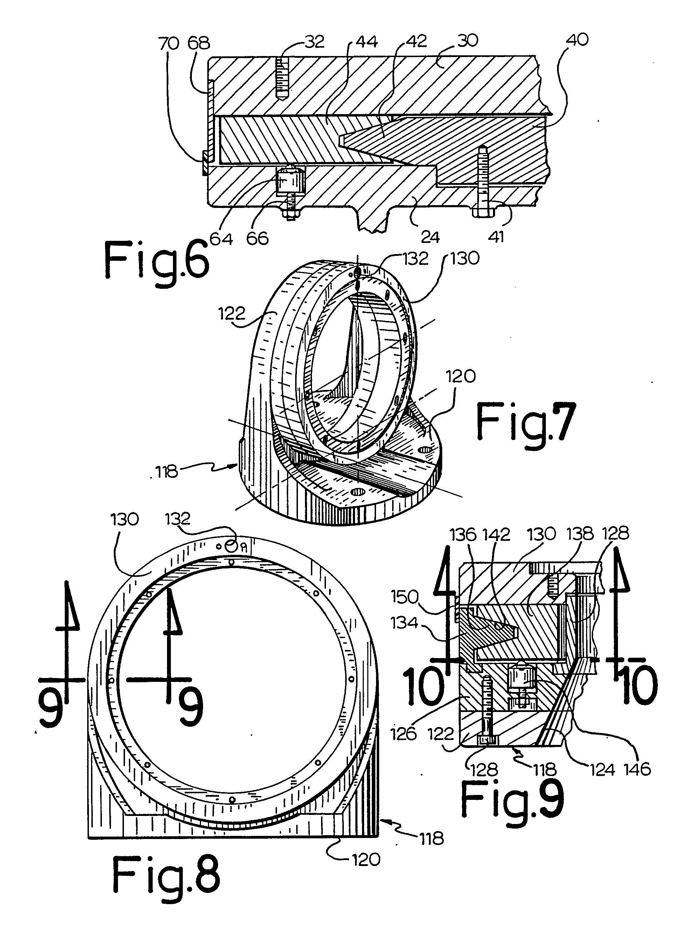

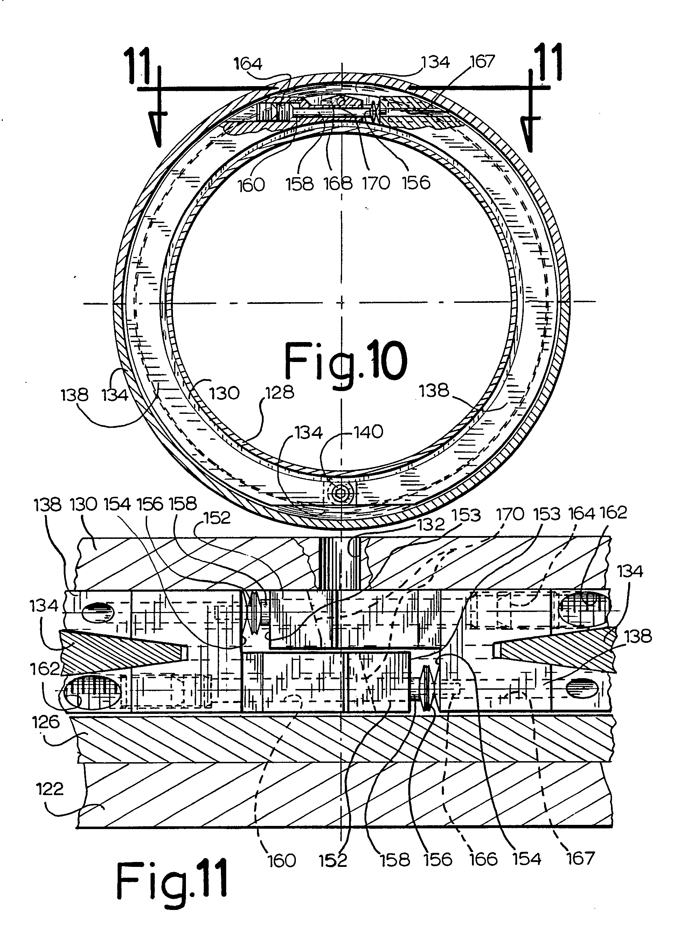

Les figures 7 à 11 montrent une autre réalisation caractérisée par le fait que la plaque de support et aussi le tronçon supérieur de la base sont de forme annulaire, de sorte que l'arrière de la pièce à usiner supportée par la plaque de support peut être usinée par un outil soutenu par le support à outil T. La base 118 est réalisée d'un tronçon inférieur 120 pourvu d'orifices, ou semblables, à être fixé à la table de machine outil, 14, et un tronçon supérieur 122 qui est normal au tronçon inférieur de base, 120, et qui est de forme annulaire, définissant une grande ouverture 124. Un anneau 126 (voir la figure 9) est fixé par des vis 128 à l'avant du tronçon supérieur de base 122 et est coaxial à celui-ci. Une plaque annulaire de support, 130, de diamètres externe et interne sensiblement identiques à ceux du tronçon supérieur de base 122, est installée coaxialement à celui-ci, parallèlement à celui-ci et espacée de celui-ci pour une libre rotation autour d'un axe coaxial à celui du tronçon supérieur de base 122. La plaque de support 130 a un orifice d'indexation 132 (voir les figures 7, 8 et 11). Un organe de frein annulaire 134 est fermement fixé à l'anneau 126. L'organe de frein 134 a un rebord radialement intérieur 136 qui est en forme de V en coupe, définissant des surfaces de freinage. Une paire de sabots de frein semi-circulaires 138 sont pivotés à une extrémité sur une goupille commune de pivot 140, laquelle est fixée à la plaque de support 130, de sorte que les sabots de frein 138 tournent avec la plaque de support. Chaque sabot de frein 138 passe dans l'organe de frein 134 et a un sillon externe 142 qui fait un V en coupe et qui s'accouple avec le rebord formant un V en coupe 136 de l'organe de freinage 134. Des roulements de butée 146 également espacés et portés par l'anneau 126 s'accotent contre les sabots de frein 138 pour permettre la rotation libre et pour guider l'agencement de la plaque de support 130, avec ses sabots de frein 138. Un couvercle annulaire 128 est fixé à l'anneau 126 et recouvre la surface intérieure des sabots de frein 138. Semblablement, une bande 150 est fixée à l'organe de freinage stationnaire 134 et a un ajustement de coulissement avec la périphérie externe de la plaque de support 130. Le couvercle 128 et la bande 150 protègent les surfaces de freinage de l'organe de freinage 134 et des sabots de freinage 138 contre la poussière et semblable.

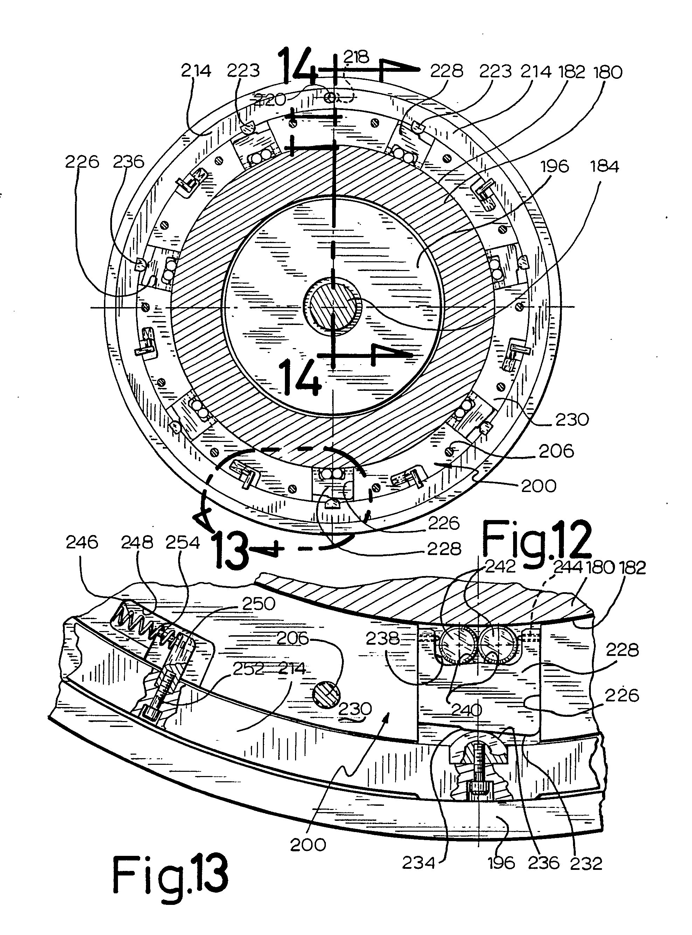

Si on se rapporte aux figures 10 et 11, les portions d'extrémités extérieures libres des deux sabots de frein 138, indiquées en 152, sont d'épaisseur et de largeur réduites et se chevauchent l'une l'autre. Donc, l'on définit un épaulement transversal 154 adjacent à la racine de chaque portion d'extrémité libre 152. Des ressorts de Belleville 156 sont interposés entre un épaulement 154 et l'extrémité intérieure d'une tige de poussée 158 qui passe au travers un orifice 160 s'ouvrant à la face d'extrémité libre 153 de la portion d'extrémité libre 152 à une extrémité, et à l'autre extrémité en 162 à une face extérieure du sabot de frein correspondant. L'orifice 160 est fileté à l'extrémité 162 pour recevoir un bouchon fileté d'ajustement 164, de façon à ajuster la force de compression exercée par le ressort 156, les deux ressorts contraignant les portions d'extrémité libre des deux sabots dans des directions opposées pour provoquer le pivotement des sabots de frein 138 radialement vers l'extérieur pour entrer en contact de freinage avec l'organe de freinage qui les entoure. La force de freinage exercée peut être ajustée en ajustant la position axiale des bouchons 164. Chaque tige de poussée 158 a une portion d'extrémité 166, de diamètre réduit, sur laquelle sont installés les ressorts de Belleville 156, la portion 166 de diamètre réduit de tige engageant de façon libre un orifice 167 ménagé dans la portion d'extrémité libre 152 de l'autre sabot de frein 138.

Chaque portion d'extrémité libre 152 a une encoche transversale 168 s'ouvrant à la face d'extrémité libre 153 de la portion 132 et a une face inférieure 170 qui est transversalement inclinée, tel que montré à la figure 11. Les deux encoches 168 sont transversalement alignées sur l'orifice d'indexation 132 et définissent un orifice qui est d'aire plus petite en coupe que celle de l'orifice d'indexation 132 lorsque les deux sabots de frein sont en position de freinage. Suite à l'insertion de la goupille 10, montrée à la figure 1, ou de la goupille 10a, montrée à la figure 21, la goupille engage les encoches opposées 168 et provoque le mouvement de pivot des deux sabots de frein l'un vers l'autre, dès lors libérant l'organe de frein 134. La goupille peut alors faire tourner la plaque de support 130 au moyen du support à outil T, d'une position indexée à une autre position indexée.

Les figures 12, 13, 14, 13a, 13b de même que les figures 15 et 16 , montrent une autre réalisation semblable à celle de la figure 1 en autant que la plaque de support et son support sont concernés, mais utilisant un système différent de freinage et un système différent pour libérer les freins. Plus particulièrement, le système de freinage utilisé dans cette seconde réalisation peut être décrit généralement comme étant un embrayage amovible à roulettes deux-voies. La base, généralement indiquée en 172, comprend un tronçon inférieur, non représenté, et semblable au tronçon inférieur de base 20 de la figure 1. La base 172 a un tronçon supérieur 174 normal à la section de base et dans une cavité centrale avant 176 sur laquelle est fixée par des boulons 178 une plaque circulaire 180 offrant une surface cylindrique périphérique 182 servant de voie pour les roulettes de l'embrayage à deux voies. Un mandrin axial 184 est fixé de façon rigide dans un orifice central de la plaque 180 au moyen d'une rondelle 186 appliquée à la face arrière de la plaque 180 au travers une ouverture 188 réalisée dans la section supérieure 174, la rondelle 186 étant serrée au moyen d'un boulon 190 vissé dans l'extrémité arrière du mandrin 184. L'extrémité avant du mandrin 184 a une tête agrandie 192 retenant la voie intérieure d'un roulement radial et de butée combiné, 194, dont la voie extérieure engage un retrait central de la plaque de support 196, ladite plaque de support étant pourvue d'orifices filetés à sa face avant, non représentés, pour fixer une palette ou un gabarit supportant la pièce à être usinée. La plaque de support 196 forme un retrait arrière 198 pour recevoir la portion annulaire avant de la plaque 180 et une portion annulaire arrière radialement extérieure, 200, de la plaque de support 196 surplombe la surface cylindrique 182 de la plaque 180. Cette portion annulaire 200 définit une surface cylindrique radialement intérieure, 202, en contact coulissant avec la surface cylindrique extérieure 182 de la plaque 180. Un anneau de protection 204 est fixé par des boulons 206 à l'arrière de la portion annulaire 200, étant coaxial à celle-ci. Des roulements à butée 208 portent contre la face arrière de l'anneau de protection 204. Ces roulements à butée sont situés dans des cavités 210 de la section supérieure de base 174 et chacun peut être positionné axialement de façon ajustable au moyen d'un boulon 212. Donc, l'agencement de la plaque de support 196 et de l'anneau de protection 204 guide radialement et axialement la plaque de support 196 dans son mouvement de rotation. Un anneau d'actionnement continu de bloc de came ou anneau de came 214 est installé de façon coulissante dans un sillon annulaire 216 réalisé dans la face arrière de la plaque de support 196. L'anneau de came 214 est coaxial à l'axe de rotation de la plaque de support. La plaque de support 196 a un orifice 218 défini par une douille 219 servant d'orifice d'indexation pour recevoir la goupille 10 ou 10a. La goupille est destinée à coulisser dans un orifice 220 ménagé dans l'anneau de came 214. La goupille peut passer librement au travers l'orifice 222 ménagé dans l'anneau de protection 204.

Une douille 224 est insérée dans la section supérieure 174 de la base 172 et définit un orifice d'indexation zéro, dont le but sera détaillé ci-après.

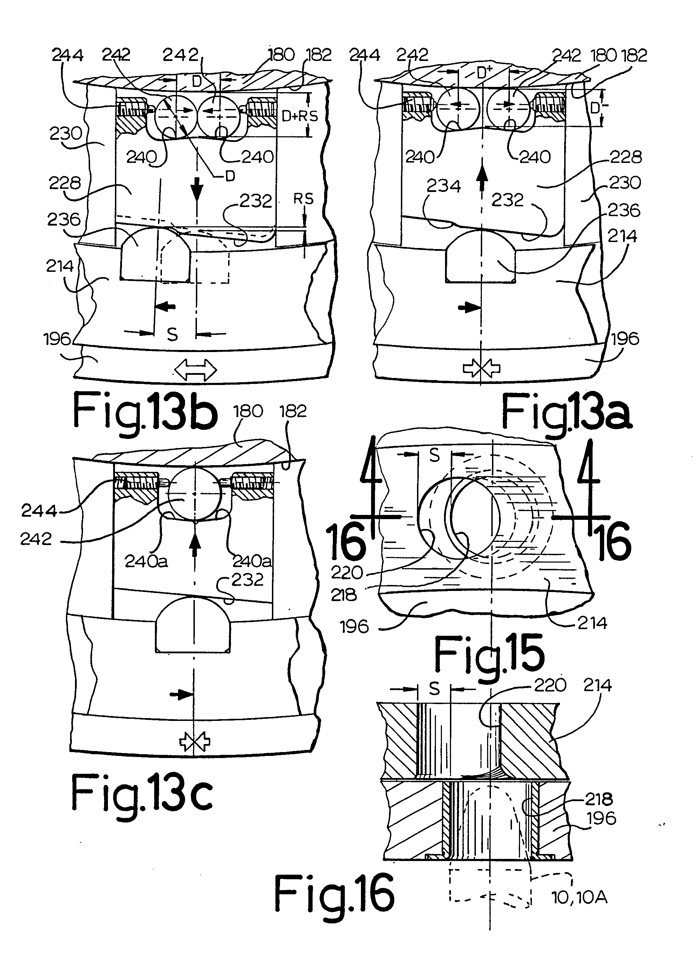

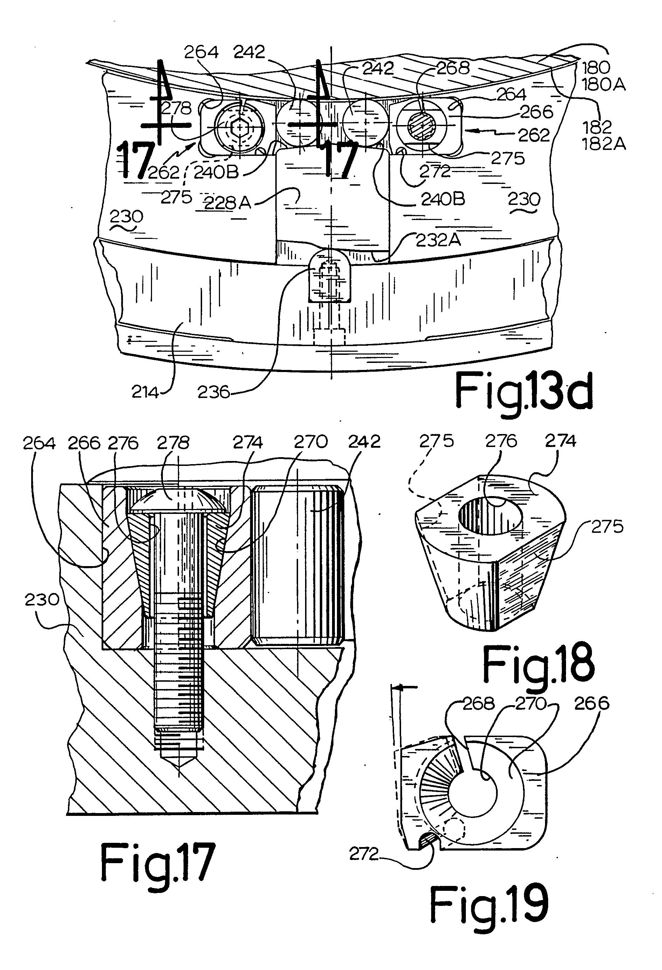

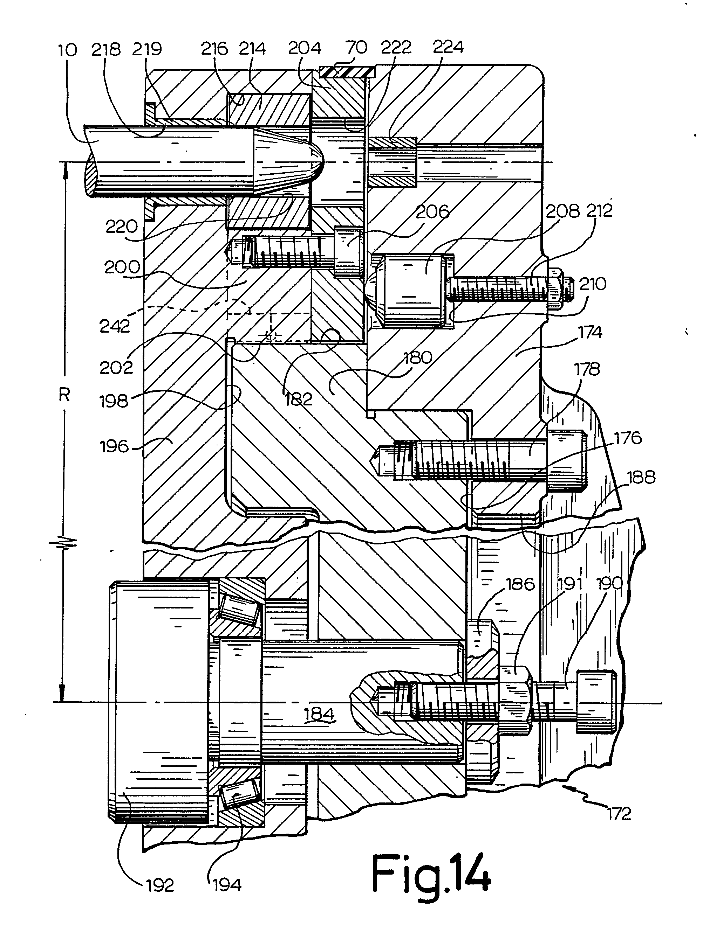

En se référant aux figures 12 et 13, la portion annulaire arrière 200 de la plaque de support 196 définit une pluralité de cavités 226 également espacées du point de vue angulaire et orientées radialement, dans chacune desquelles est installé de façon coulissante un bloc de came 228. Donc, la portion annulaire 200 forme une pluralité de sections d'anneau 230 en contact coulissant avec la surface cylindrique 182 de la plaque 180. Chaque bloc de came a une surface de came radialement vers l'extérieur, 232. Toutes ces surfaces de came sont également en biais dans la même direction et chacune a un épaulement intermédiaire 234. L'anneau de came 214 est pourvu d'une pluralité de doigts également angulairement espacés 236 chacun faisant saillie radialement dans la cavité 226 et en contact avec la surface de came externe 232 des blocs de came 228. Chaque bloc de came 228 a une cavité radialement intérieure 238, dont la surface inférieure forme deux surfaces de came obliquement opposées 240 et une paire de roulettes cylindriques 242 sont insérées dans la cavité 238 et chacune peut entrer en contact de roulement avec la surface cylindrique 182 de la plaque 180 et avec les surfaces de came respectives 240 du bloc de came 228.

Des pistons axialement ajustables et contraints par ressorts, en 244, sont installés dans le bloc de came 228 sur chaque côté de la cavité 238 afin d'accoter respectivement la surface extérieure de la paire de roulettes 242 de façon à les maintenir centrées dans la cavité 238. L'anneau de came 214 est constamment contraint dans une direction inverse de celle de la rotation des aiguilles d'une montre, au moyen d'une pluralité de ressorts en spirale à compression également espacés, 246, accotant à une extrémité contre le fond d'une cavité 248 réalisée dans la section d'anneau 230 et à l'autre extrémité contre un accotement 250 fixé à l'anneau de came 214 au moyen d'un boulon 252. L'accotement 250 passe librement dans la cavité 248 et porte une goupille de guidage 254 insérée à une extrémité du ressort en spirale 246. Dès lors, la pluralité de ressorts en spirale 246 contraint constamment l'anneau de came 214 dans une position dans laquelle les doigts 236 déplacent radialement vers l'intérieur les blocs de came 228 en une position radialement la plus intérieure dans laquelle les roulettes 242 sont prises en sandwich entre la surface cylindrique 182 de la plaque 180 et les deux surfaces opposées de came 240 tel que montré aux figures 13a et 13. Donc, en cette position, la plaque de support est définitivement empêchée de tourner dans toute direction par rapport à la base 172.

L'orifice 220 de l'anneau de came 214 (voir les figures 15 et 16) est transversalement décalé de l'orifice d'indexation 218 de la plaque de support 196 lorsque l'anneau de came 214 est en position d'embrayage comme décrit ci-haut. Donc, l'insertion de la goupille au travers les orifices 218 et 220 provoquera le déplacement de l'anneau de came dans une direction dans le sens des aiguilles d'une montre et les doigts 236 dégageront les nombreux blocs de came 228 qui peuvent se déplacer radialement vers l'extérieur, pour ainsi produire le débrayage de la plaque de support. L'on remarquera que l'épaulement 234 à la surface de came extérieure 232 de chaque bloc de came 228 permet une action d'embrayage et de débrayage rapide.

La figure 13c montre un agencement modifié du système d'embrayage selon lequel l'on prévoit une seule roulette pour chaque bloc de came, la roulette étant destinée à accoter la surface cylindrique 182 de la plaque 180 et l'une ou l'autre des portions 240a de surface de came inclinée opposées. Ces portions de surface de came 240a divergent dans une direction radialement intérieure, contrairement aux portions 240 de surface de came qui sont divergentes selon la direction radialement extérieure.

L'anneau de protection 204 (figure 14) sert en combinaison avec la bande 70 pour empêcher la poussière et semblable d'entrer dans le système d'embrayage. Cet anneau de protection sert aussi en tant que surface dure pour le contact avec les roulements à butée 208 et finalement sert à fermer la cavité contenant l'anneau de came 214.

La figure 20 montre une autre réalisation utilisant fondamentalement le même système d'embrayage mais destiné à être utilisé dans un dispositif de support qui est de forme annulaire comme dans la réalisation de la figure 7 et la figure 8 de sorte que la pièce à usiner puisse être usinée à l'arrière qui est exposée au travers l'ouverture centrale de la plaque de support et de la section supérieure de la base. La section supérieure de base 174a correspond à la section de base supérieure 174 exceptée qu'elle est annulaire pour fournir un grande ouverture en 256. La section de base supérieure 174a porte des roulements de butée 208 comme pour la réalisation de la figure 14 et aussi un orifice à indexation zéro 224 constitué par un roulement et porte aussi une vis d'ajustement 116 à être décrite plus bas pour être utilisée en association avec un instrument 102 montré à la figure 23. Une plaque 180a correspond à la plaque 180 sauf qu'elle est annulaire pour former une grande ouverture 258 vis-à-vis l'ouverture 256, la plaque annulaire 180a est fixée à la section supérieure 174a de base au moyen de boulons 260. La plaque 180a forme une surface cylindrique extérieure 182a constituant la voie radialement intérieure pour les roulettes du système d'embrayage; la plaque 180a porte une pluralité de roulements de butée 208a également angulairement espacés engageant la face avant de l'anneau de protection 204a, les roulements de butée 208a ont la même fonction que le roulement 194 dans la réalisation de la figure 14. L'anneau de protection 204a est fixé par des boulons 206a à l'arrière de la plaque de support 196a dont la forme est annulaire et qui coulisse sur la surface cylindrique 182a. La plaque de support 196a a, comme dans la réalisation de la figure 14, un sillon annulaire à l'arrière pour recevoir l'anneau de came 214. Le système d'embrayage en tant que tel est comme décrit précédemment et fonctionne de la même façon.

Le système d'embrayage en tant que tel peut également être modifié pour être utilisé ou bien en tant que plaque de support en forme de disque ou en tant que plaque de support annulaire, de la manière représentée aux figures 13d, 17, 18 et 19. Les blocs de came 228a ont une surface de came radialement extérieure, 232a, comme dans la réalisation de la figure 13, pour coopérer avec le doigt 236 de l'anneau de came 214 mais les portions 240b de surface de came radialement intérieures ne sont pas formées au fond d'une cavité de bloc de came mais en définissent une surface intérieure complète. Ces portions de surface de came 240b sont divergentes radialement vers l'extérieur comme à la figure 13 mais les pistons 244 sont remplacés par des systèmes d'accotement ajustables 262: chaque section d'anneau 230 a une cavité d'extrémité 264 dans laquelle est située un bloc fendu 266 qui est de forme généralement rectangulaire tel que montré en vue d'extrémité et comprend une fente radiale 268 passant longitudinalement par rapport à celle-ci pour s'ouvrir à sa surface extérieure et dans un orifice conique 270. Un sillon 272 est réalisé dans la face extérieure du bloc 266 opposé à la fente 268, étant sensiblement parallèle au biseau de l'orifice 270 pour fournir une zone frangible au travers une paroi du bloc qui est d'épaisseur uniforme sur toute la longueur du bloc. Un bloc de coin 274 de forme frusto-conique est inséré dans l'orifice 270 et s'accouple avec celui-ci. Le bloc de coin a des faces plates opposées 275 et un orifice central 276 pour recevoir un boulon 278 qui est vissé dans la section d'anneau 230 de façon à ajuster le degré d'insertion du bloc de coin 274 et donc le degré d'expansion du bloc d'accotement 266 tel que montré à la figure 19. Le bloc de coin 274 est orienté de telle façon à ce que ses faces aplaties 275 soient parallèles à la direction d'expansion pour laisser de l'espace libre pour l'expansion de bloc d'accotement. De cette façon, les positions limite mutuellement extérieures des deux roulettes peuvent être précisément ajustées de sorte que les deux roulettes entrent en contact avec les deux portions de surfaces de came 240b et la surface cylindrique 182 ou 182a avec une pression égale dans la position de barrure des blocs de came 228a. Donc, la plaque de renfort est fermement barrée pour empêcher tout mouvement, que ce soit dans le sens des aiguilles d'une montre ou dans le sens inverse.

La figure 23, tel que montrée à la neuvième feuille des dessins, montre un instrument manuel, généralement indiqué en 102, pour dégager manuellement les moyens de freinage et pour faire tourner la plaque de support en une position à indexation zéro, utilisant un orifice d'ajustement au zéro 72 réalisé dans la portion supérieure de base 24, 174 ou 174a. L'instrument 102 comprend un corps cylindrique 104, ayant une portion d'extrémité intérieure biseautée 106 et une section intermédiaire filetée à l'extérieur, 108, sur laquelle un collier fileté à l'intérieur 110 peut être vissé de façon ajustable pour s'accoter contre la face avant de la plaque de support 30 dans une telle position que la portion d'extrémité intérieure 106 du corps 104 engagé de façon coulissante au travers l'orifice 36 libérera les sabots de freinage 44, de façon à faire tourner manuellement la plaque de support 38, 190, ou 190a au moyen du corps 104.

Un mandrin 112 peut alors être manuellement inséré de façon coulissante au travers une portion intérieure restreinte 114 de l'orifice 115 du corps 104, de façon à entrer et à avoir un ajustement par coulissement avec l'orifice 72 à ajustement à zéro de la section supérieure de base 24, 174 ou 174a, pour positionner exactement la plaque de support 30, 190 ou 190a, dans une position à indexation zéro. Lorsqu'en cette position, une vis d'ajustement 116 (voir la figure 20), qui est vissée au travers la section supérieure de base 24, 174 ou 174a, est serrée contre un sabot de frein 44, 138 ou contre l'anneau de protection 204 ou 204a pour empêcher la rotation de la plaque de support 30, 190 ou 190a. Par la suite, le mandrin 112 est retiré de même que le corps 104. Les sabots de frein 44, 138 ou l'anneau de came 214 peuvent prendre leur position de freinage sous la contrainte des ressorts de Belleville 54 ou 156 ou des ressorts 246. La plaque de support est alors en position précisément indexée à zéro et la vis d'ajustement 116 peut être dévissée. Bien entendu, l'instrument 102 peut être utilisé en association avec l'une ou l'autre des réalisations décrites ci-haut.

**Revendications**

1. Un dispositif de support de pièce usinée comprenant une base destinée à être fixée à une surface de support, une plaque de support portée de façon tournante par ladite base pour tourner autour d'un axe de plaque de support, ladite plaque de support ayant des moyens d'engagement d'organe espacés de façon radiale dudit axe de plaque de support et avec lesquels un organe allongé peut être engagé de façon amovible lorsque ledit organe y est aligné, des moyens de freinage amovibles interposés entre ladite base et ladite plaque de support pour barrer ladite plaque de support de façon à empêcher sa rotation relativement à ladite base et des moyens de dégagement sensibles audit engagement d'organe avec lesdits moyens d'engagement d'organe pour provoquer le dégagement desdits moyens de freinage, de sorte que lorsque ledit organe n'est pas engagé avec lesdits moyens d'engagement d'organe, ladite plaque de support est barrée par lesdits moyens de freinage dans une première position d'indexation tournée, et l'engagement dudit organe avec lesdits moyens d'engagement d'organe provoque le dégagement desdits moyens de freinage pour permettre la rotation de ladite plaque de support par ledit organe jusqu'à une seconde position tournée d'indexation.

2. Un disposition de support tel que défini à la revendication 1, en combinaison avec ledit organe, de sorte que ledit organe est une goupille et lesdits moyens d'engagement d'organe sont un orifice réalisé dans ladite plaque de support et ayant un ajustement coulissant avec ladite goupille.

3. Un dispositif de support tel que défini à la revendication 2, caractérisé en ce que ladite base a une première section de base pourvue de moyens pour l'immobiliser à ladite table et une seconde section de base portant ladite plaque de support pour la rotation de celle-ci autour dudit axe de plaque de support en un plan parallèle à ladite seconde section.

4. Un dispositif de support tel que défini à la revendication 3, caractérisé en ce que ladite plaque de support est circulaire, ledit orifice étant situé de façon adjacente à sa périphérie sur l'extérieur d'une pièce usinée portée par ladite plaque de support.

5. Un dispositif de support tel que défini à la revendication 4, caractérisé en ce que ladite seconde section de base est en forme de disque et porte un mandrin en son centre, ladite plaque de support étant un disque co-axial à ladite seconde section de base en forme de disque et pouvant tourner sur ledit mandrin.

6. Un dispositif de support tel que défini à la revendication 4, caractérisé en ce que ladite seconde section de base et ladite plaque de support ont chacune une forme annulaire pour révéler au travers une portion de pièce usinée portée par ladite plaque de support.

7. Un dispositif de support tel que défini à la revendication 3, caractérisé en ce que ladite goupille a une extrémité biseautée et lesdits moyens de freinage comprennent un organe de freinage circulaire fixé de façon coaxiale à ladite seconde section de base, une paire de sabots de frein courbés s'ajourant avec ledit organe de freinage et ayant une extrémité portée de façon pivotante par ladite plaque de support, et des moyens de ressort contraignant lesdits sabots de frein en contact de freinage avec ledit organe de freinage, lesdits sabots de freinage ayant des portions d'extrémité libres contiguës qui occupent une première position relative lorsque lesdits sabots de frein occupent une position de freinage de l'organe de freinage, et une seconde position relative lorsque lesdits sabots de frein occupent une position de dégagement d'organe de freinage, et caractérisé en ce que lesdits moyens de dégagement comprennent des encoches opposées réalisées dans lesdites portions d'extrémités libres vis-à-vis ledit orifice, lesdites encoches formant une ouverture échancrée dont les dimensions en coupe sont plus petites que celles de ladite goupille lorsque lesdites portions d'extrémités libres sont en ladite première position, de sorte que l'insertion de la goupille au travers ledit orifice et au travers ladite ouverture constituée par lesdites encoches, provoque le déplacement desdites portions d'extrémités libres vers ladite seconde position et, donc, le dégagement desdits sabots de frein dudit organe de frein.

8. Un dispositif de support tel que défini à la revendication 7, caractérisé en ce que lesdits sabots de frein et ledit organe de frein ont chacun des surfaces de freinage formant un V en coupe et s'ajourant l'une avec l'autre.

9. Un dispositif de support tel que défini à la revendication 7, caractérisé en ce que ladite seconde section de base et ladite plaque de support sont des disques parallèles coaxiaux définissant un espace entre eux, ladite seconde section de base portant un mandrin central sur lequel ladite plaque de support est portée de façon à pouvoir librement y tourner, ledit organe de frein étant un organe en forme de disque situé dans l'espace entre ladite seconde section de base et ladite plaque de support, coaxialement à et fixée à ladite seconde section de base et ayant une portion extérieure radiale formant un V biseauté en coupe, lesdits sabots de frein entourant ledit organe de frein dans ledit espace, ayant un sillon longitudinal radial intérieur, formant un V en coupe, pour s'ajourer à la portion extérieure en forme de V dudit organe de frein, lesdits moyens de ressort contraignant lesdites portions d'extrémités libres l'une vers l'autre, lesdites portions d'extrémités libres définissant des faces d'extrémités libres contiguës dans lesquelles sont ménagées lesdites encoches.

10. Un dispositif de support tel que défini à la revendication 7,
caractérisé en ce que ladite seconde section de base et ladite plaque de support sont coaxiales, annulaires et parallèles et définissent un espace entre eux, ladite plaque de support portée de façon tournante par ladite seconde section de base pour tourner autour d'un axe coaxial à celle-ci, ledit organe de freinage étant un organe annulaire situé dans ledit espace fixé à ladite seconde section de base et coaxial à celle-ci, un organe de freinage annulaire ayant une portion périphérique radiale intérieure de coupe en V et biseautée, lesdits sabots de frein étant situés dans ledit espace et dans ledit organe de freinage annulaire et ayant un sillon longitudinal radial extérieur de coupe transversale en V s'ajourant avec ladite portion intérieure de forme en V dudit organe de frein, lesdits moyens de ressort contraignant les portions d'extrémités desdits sabots de frein dans des directions opposées, lesdites portions d'extrémités libres desdits sabots de frein se chevauchant l'une l'autre, lesdites encoches étant décalées dans la direction dudit axe de plaque de support.

11. Un dispositif de support tel que défini à la revendication 2,
caractérisé en ce que lesdits moyens de freinage comprennent un corps fixé à ladite base et formant une surface cylindrique radiale extérieure coaxiale audit axe de plaque de support, des sections annulaires entourant de façon coulissante ladite surface cylindrique et fixées à ladite plaque de support, lesdites sections annulaires définissant des espaces entre leurs extrémités adjacentes, lesdits espaces étant également espacés d'un point de vue angulaire, des blocs de came pouvant être radialement déplacés dans lesdits espaces, chaque bloc de came ayant une paire intérieure radiale de portions opposées de surfaces de came biseautées faisant face à ladite surface cylindrique, une roulette pour chaque bloc de came passant entre ladite surface cylindrique et ladite paire de portions de surface de came, de sorte qu'un déplacement radial vers l'intérieur desdits blocs de came dans lesdits espaces provoque le contact desdites roulettes avec ladite surface cylindrique et avec les portions de surfaces de came respectives pour fournir une barrure deux-voie de ladite plaque de support à ladite base, chaque bloc de came ayant une surface de came radialement extérieure, l'ensemble de ceux-ci étant également inclinés et dans la même direction; un anneau continu entourant de façon coulissante lesdites sections d'anneau et coaxial audit axe de plaque de support, ledit anneau continu ayant des doigts faisant saillie radialement vers l'intérieur chacun entrant en contact avec la surface extérieure de came d'un bloc de came, de sorte que le déplacement rotatif dudit anneau continu dans une direction en une première position provoque un déplacement radial vers l'intérieur dudit bloc de came et la barrure de ladite plaque de support, et des moyens de contrainte agissant entre ledit anneau continu et ladite plaque de support pour contraindre ledit anneau continu vers ladite première position; et lesdits moyens de dégagement comprenant un orifice ménagé dans ledit anneau continu partiellement vis-à-vis ledit orifice dans ladite plaque de support, lorsque ledit anneau continu est dans ladite première position, de sorte que l'insertion de la goupille dans l'orifice de ladite plaque de support et dans l'orifice dudit anneau continu provoque le déplacement dudit anneau continu dans une direction opposée à ladite première position vers une seconde position dans laquelle lesdits blocs de came peuvent se déplacer radialement vers l'extérieur, pour ainsi débarrer ladite plaque de support.

12. Un dispositif de support tel que défini à la revendication 11,
caractérisé en ce que lesdites portions de surface de came radialement intérieures sont radialement divergentes vers l'intérieur, et en ce qu'il y a une seule roulette pour chaque bloc de came.

13. Un dispositif de support tel que défini à la revendication 11,
caractérisé en ce que lesdites portions de surfaces de came radialement intérieures sont divergeantes radialement vers l'extérieur et en ce qu'il y a pour chaque bloc de came, une paire de roulettes en contact respectif avec lesdites portions de surfaces de came.

14. Un dispositif de support tel que défini à la revendication 12,
comprenant au surplus des moyens d'accotement entrant en contact avec ladite roulette unique sur ses côtés opposés pour centrer ladite roulette unique par rapport auxdites portions de surfaces de came.

15. Un dispositif de support tel que défini à la revendication 14,
caractérisé en ce que lesdits moyens d'accotement sont des pistons contraints par des ressorts.

16. Un dispositif de support tel que défini à la revendication 13,
comprenant au surplus des blocs d'accotement entrant en contact avec ladite paire de roulettes sur des côtés opposés de ladite paire de roulettes pour centrer ladite paire de roulettes par rapport auxdites portions de surface de came, lesdits blocs étant fixés de façon ajustable auxdites sections annulaires pour un déplacement ajustable vers et à l'opposé desdites paires de roulettes.

17. Un dispositif de support tel que défini à la revendication 11,

caractérisé en oe que ladite surface de came extérieure radialement de chaque bloc de came comprend un épaulement pour permettre un déplacement radial rapide dudit bloc de came lorsque ledit anneau continu est déplacé en rotation.

18. Un dispositif de support tel que défini à la revendication 11, caractérisé en ce que ladite base a une section inférieure et une section supérieure dans des plans respectivement normaux l'un à l'autre, ladite section inférieure ayant des moyens pour la fixer à ladite table et ladite section supérieure portant ladite plaque de support pour la rotation de celle-ci autour dudit axe de plaque de support selon un plan parallèle à ladite section supérieure.

19. Un dispositif de support tel que défini à la revendication 18, caractérisé en ce que ladite plaque de support est circulaire, ledit orifice étant situé de façon adjacente à la périphérie de ladite plaque circulaire de support sur l'extérieur d'une pièce usinée portée par ladite plaque de support.

20. Un dispositif de support tel que défini à la revendication 19, caractérisé en ce que ladite section supérieure de base est en forme de disque et porte un mandrin en son centre, ladite plaque de support formant un disque coaxial à ladite section supérieure de base en forme de disque et pouvant tourner sur ledit mandrin.

21. Un dispositif de support tel que défini à la revendication 19, caractérisé en ce que ladite section supérieure de base et ladite plaque de support ont chacune une forme annulaire pour révéler au travers une portion de pièce usinée portée par ladite plaque de support.

22. Un dispositif de support tel que défini à la revendication 2, caractérisé en ce que ladite goupille a une portion principale, une pointe biseautée séparée coaxiale qui peut tourner par rapport à ladite portion principale autour de l'axe longitudinal de celle-ci.

23. Un dispositif de support tel que défini à la revendication 2, caractérisé en ce que ladite goupille a une portion principale, une portion intermédiaire et une portion de pointe biseautée, l'ensemble desdites portions étant coaxiales, des moyens frangibles fixant ladite portion intermédiaire à ladite portion principale et pouvant se briser lorsqu'une force de cisaillement est appliquée sur ladite portion intermédiaire, transversalement à l'axe longitudinal de ladite portion principale et d'une magnitude allant au-delà d'une force de cisaillement prédéfinie, ladite portion de pointe biseautée étant portée de façon à pouvoir tourner par ladite portion intermédiaire pour une rotation autour de l'axe longitudinal desdites portions.

24. Un dispositif de support tel que défini à la revendication 13, comprenant au surplus des moyens d'accotement disposés sur des côtés opposés de ladite paire de roulettes pour centrer ladite paire de roulettes par rapport auxdites portions de surfaces de came, lesdits moyens d'accotement comprenant des blocs à ouverture conique échancrées, un organe de coin étant inséré dans ladite ouverture de chaque bloc pour l'expansion ajustable dudit bloc par ajustement axial dudit organe en coin dans ladite ouverture et des moyens de boulon vissés dans lesdites sections annulaires pour ajuster la position axiale desdits organes de coin.

25. En combinaison avec le dispositif de support de la revendication 2, un instrument pour tourner de façon manuelle ladite plaque de support jusqu'à une position d'indexation à 0 degré, comprenant un corps cylindrique allongé ayant un ajustement coulissant avec ledit orifice de plaque de support et susceptible de libérer lesdits moyens de freinage lorsque poussé dans ledit orifice, ledit corps ayant un orifice axial et une tige de traînée pouvant coulisser dans ce dernier orifice pour passer de façon coulissante dans ledit orifice de base, ledit orifice de base étant vis-à-vis du point de vue axial audit orifice de support lorsque ladite plaque de support est en sa position d'indexation à zéro degré.

26. Un dispositif de support tel que défini à la revendication 25, comprenant au surplus une portion filetée à l'extérieur formée sur ledit corps cylindrique, un collier fileté à l'intérieur pouvant être vissé sur ladite portion filetée à l'extérieur, ledit collier étant destiné à accoter ladite plaque de support lorsque ledit corps est inséré dans ledit orifice de plaque de support en une position pour dégager lesdits moyens de freinage.

27. Un dispositif de support tel que défini à la revendication 1, combiné avec une machine-outil à commande numérique du type ayant un support à outil et une table relativement déplaçable selon les axes X, Y, et Z, et en combinaison avec ledit organe, celui-ci étant fixé de façon amovible audit support d'outil, ladite base étant fixée à ladite table qui est ladite surface de support, ladite plaque de support étant destinée à porter une pièce usinée selon une position faisant face audit support d'outil, ledit organe engageable avec lesdits moyens engageant un organe lorsqu'il y a un mouvement relatif de ladite table et dudit support d'outil selon ledit axe Z suite à ce que ledit organe soit aligné avec lesdits moyens d'engagement d'organe, et tournant ledit support d'outil dans un cercle autour dudit axe de plaque de support provoquant la rotation de ladite plaque de support.

EP 0 369 488 A2

Fig.1

Fig.2

Fig.3

56 54 50 60       50 54 58  30  64

64

40 42

64

44

26

44

48

48

41

30

63 62

## Fig.4

10  12     38 36 68 60 52  70 74 72  56 54

Z

66

64

44 46 24 42

32

40

34

28

30

26

R

## Fig.5

70 68  32  44  42  30  40

64  66  24  41

**Fig.6**

122  132  130

120

118

**Fig.7**

130  132

136 142  130 138 128

150

134

126  122

128  118  124 146

9  9

10  10

**Fig.9**

118

120

**Fig.8**

Fig.10

Fig.11

EP 0 369 488 A2

Fig.12

Fig.13

# Fig.13b

# Fig.13a

# Fig.13c

# Fig.15

# Fig.16

Fig.13d

Fig.17

Fig.18

Fig.19

Fig.14

EP 0 369 488 A2

Fig.20

Fig.21

Fig.23

Fig.22